# EUROPÄISCHE PATENTSCHRIFT

(11) **EP 1 506 909 B1**
(45) Veröffentlichungstag und Bekanntmachung des Hinweises auf die Patenterteilung: **02.11.2006**
(21) Anmeldenummer: 04014417.2
(22) Anmeldetag: 19.06.2004
(51) Int. Cl.: B62D 35/00

(54) **Heckflügel für ein Kraftfahrzeug**
Rear spoiler for a vehicle
Becquet arrière pour un véhicule automobile

(30) Priorität: 09.08.2003 DE 10336664
(43) Veröffentlichungstag der Anmeldung: 16.02.2005
(73) Patentinhaber: Dr.Ing. h.c.F. Porsche Aktiengesellschaft, 70435 Stuttgart (DE)
(72) Erfinder: Adams, Stefan, 71229 Leonberg (DE)

(56) Entgegenhaltungen:
- WO-A-97/32770
- DE-A- 10 002 511
- US-A- 5 240 536

## Beschreibung

Bei der Erfindung wird ausgegangen von einem Heckflügel für ein Kraftfahrzeug, gemäß Oberbegriff des Anspruchs 1.

Ein gattungsbildender Heckflügel ist der DE 100 02 511 A1 zu entnehmen. Er ist als Hohlkörper realisiert, der zweiteilig aus einem Ober - und einem Unterteil zusammengesetzt ist, die ein Flügeldach und einen Flügelboden bilden. Ein vorderer Abschnitt der Fügefläche zwischen Ober - und Unterteil liegt - in Fahrtrichtung gesehen - an einer vorderen Stirnseite des Heckflügels. Durch eine Schraubverbindung werden Ober - und Unterteil aneinander befestigt. Der Heckflügel besitzt ferner eine innerhalb des Hohlkörpers angeordnete Verstärkungsstruktur, die einen in Fahrzeugquerrichtung verlaufenden Quersteg aufweist, von dem an beiden Stegflächen V - förmig ausgerichtete Schrägstege und etwa in Fahrzeuglängsrichtung verlaufende, zwischen den Schrägstegen liegende Längsstege ausgehen. An beiden seitlichen Enden des Hohlkörpers sind in dem Flügelboden jeweils mit seitlichem Abstand zur Verstärkungsstruktur Durchbrüche eingebracht, durch die jeweils eine Koppelstange hindurchtritt, die der Betätigung einer innerhalb des Hohlkörpers angeordneten Flügelklappe dienen.

Aufgabe der Erfindung ist es, einen Heckflügel der gattungsbildenden Art zu schaffen, bei dem eventuell in den Hohlkörper eindringendes Wasser wieder abgeleitet werden kann.

Gelöst wird diese Aufgabe erfindungsgemäß mit einem Heckflügel, der die in Anspruch 1 genannten Merkmale aufweist.

Die mit der Erfindung hauptsächlich erzielten Vorteile sind darin zu sehen, dass im Fahrbetrieb des Kraftfahrzeugs in den Hohlkörper eindringendes Wasser zunächst an dem Quersteg mit der ebenen Stegfläche aufgefangen und über den in dem Verlauf des Wasserkanals liegenden Durchbruch, der die untere Flügelwand durchsetzt, wieder aus dem Hohlkörper heraus geleitet wird, wodurch eine unerwünschte Wasseransammlung in dem Hohlkörper vermieden bzw. verringert und eine gezielte Wasserführung innerhalb des Hohlkörpers erreicht wird. Erzielt wird dies insbesondere dadurch, dass die Stegfläche eben ist, also von dieser Stegfläche keine Schräg - oder Längsstege ausgehen, und somit ein durchgehender Wasserkanal bereit gestellt ist, der der gezielten Wasserführung dient. Außerdem ist vorteilhaft, dass an die Fügefläche zwischen den beiden Teilen des Hohlkörpers hinsichtlich Dichtigkeit keine besonderen Anforderungen gestellt sind, so dass der erfindungsgemäße Heckflügel einfach und kostengünstig zusammengesetzt werden kann.

Weitere, innerhalb des Hohlkörpers die Wasserführung zu dem Durchbruch vorteilhaft beeinflussende Weiterbildungen der Erfindung sind in den Unteransprüchen angegeben.

Die Erfindung wird nachfolgend anhand von Ausführungsbeispielen mit Bezug auf die Zeichnung näher erläutert. Es zeigen:
- Fig. 1: ausschnittweise ein Kraftfahrzeug mit einer an einer Heckpartie angeordneten Luftleiteinrichtung mit einem Heckflügel in Ruhestellung,
- Fig. 2: die Luftleiteinrichtung nach Fig. 1 mit dem in Betriebsstellung ausgefahrenen Heckflügel,
- Fig. 3: eine Schnittdarstellung des Heckflügels entlang der Schnittlinie III - III in Fig. 2,
- Fig. 4: eine Schnittdarstellung des Heckflügels entlang der Schnittlinie IV - IV in Fig. 3 und
- Fig. 5: eine Schnittdarstellung des Heckflügels entlang der Schnittlinie V - V in Fig. 3.

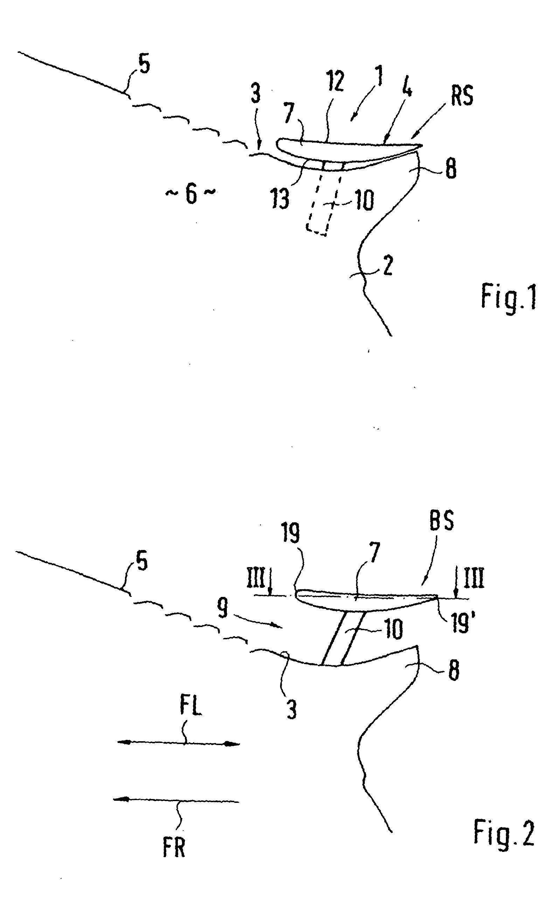

Fig. 1 und 2 zeigen von einem schematisch in Seitenansicht dargestellten Kraftfahrzeug 1, insbesondere Personenwagen, eine Heckpartie 2, an deren Oberseite 3 eine aerodynamisch wirksame und/oder optische Wirkung entfaltende Luftleiteinrichtung 4 angeordnet ist, die zumindest einen die Außenhaut 5 der Karosserie 6 des Kraftfahrzeugs überragenden Heckflügel 7 aufweist. Bevorzugt ist die Luftleiteinrichtung 4 als sogenannter Spaltflügel ausgeführt und umfasst daher neben dem Heckflügel 7 noch einen unterhalb des Heckflügels 7 liegenden, feststehenden Heckspoiler 8. Vorzugsweise ist der Heckflügel 7 aus einer in Fig. 1 gezeigten eingefahrenen Ruhestellung RS in eine in Fig. 2 dargestellte Betriebsstellung BS ausfahrbar, wodurch zwischen Heckflügel 7 und feststehendem Heckspoiler ein Spalt 9 entsteht. Gegenüber der Karosserie 6 wird der Heckflügel 7 über beispielsweise zwei Stützen, von denen lediglich eine Stütze 10 gezeigt ist, abgestützt, die - sofern der Heckflügel 7 ausfahrbar ist - einen Aussteller (nicht gezeigt) aufnehmen. Der Heckflügel 7 könnte in einem anderen Ausführungsbeispiel in der in Fig. 2 gezeigten Stellung feststehend und unbeweglich mit der Karosserie verbunden sein.

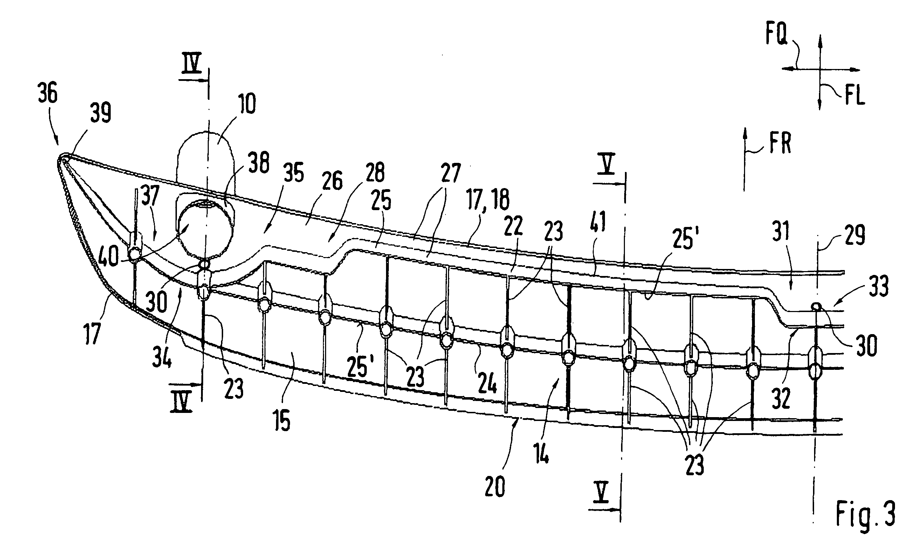

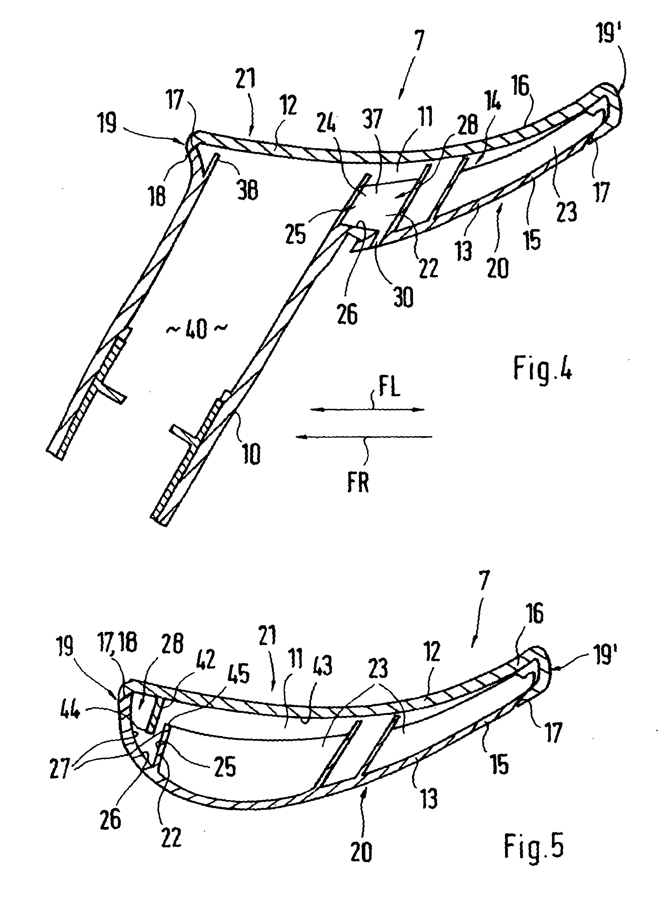

Anhand der Fig. 3 und 4 wird der Heckflügel 7 näher beschrieben, der als Hohlkörper 11 ausgeführt ist, der ein oberes Flügeldach 12 sowie einen unteren Flügelboden 13 aufweist und der ferner eine innere Verstärkungsstruktur 14 aufnimmt. Der Hohlkörper 11 ist wenigstens zweiteilig ausgeführt und die Teile 15 und 16 sind zum Hohlkörper 11 zusammengefügt und liegen in einer umlaufenden Fügefläche 17 aneinander, welche Fügefläche 17 wenigstens einen - in Fahrtrichtung FR gesehen - vorderen Abschnitt 18 aufweist, der an einer vorderen Stirnseite 19 des Heckflügels 7 liegt. Das Teil 15 ist als Unterschale 20 und das Teil 16 als Oberschale 21 des Hohlkörpers 11 realisiert, wobei die Unterschale 20 den Flügelboden 13 sowie ggf. zumindest teilweise die Stirnwand 19 und die Oberschale 21 das Flügeldach 12 und ggf. eine Rückwand 19' aufweist und jeweils bis in die Fügefläche 17 reichen. Vorzugsweise sind die Teile 15 und 16 durch eine hier nicht gezeigte Rast - bzw. Clipsverbindung aneinander befestigt und in der Fügefläche 17 stoßen die Teile 15 und 16 ggf. unverbunden aneinander. Vorzugsweise ist die Rast - bzw. Clipsverbindung innerhalb des Hohlkörpers und benachbart zur Fügefläche 17 an mehreren Stellen verteilt vorgesehen.

Die Verstärkungsstruktur 14 besitzt mehrere aufrechte, in den Hohlkörper 11 hineinragende Stege, von denen wenigstens einer als in Fahrzeugquerrichtung FQ verlaufender Quersteg 22 und andere Stege als in Fahrzeuglängsrichtung FL verlaufende Längsstege 23 orientiert sind. Ein weiterer Quersteg 24 ist - in Fahrtrichtung FR - gesehen - mit Abstand hinter dem vorderen Quersteg 22 angeordnet. Zwischen beiden Querstegen 22 und 24 erstrecken sich die Längsstege 23, so dass die dem Abschnitt 18 zugewandten Stegfläche 25 des vorderen Querstegs 22 steglos, also eben bzw. glattflächig ausgebildet und im übrigen dem Abschnitt 18 der Fügefläche 17 zugewandt ist. Die Längsstege 23 erstrecken sich mithin zwischen der der ebenen Stegfläche 25 abgewandten Rückseite 25' des Querstegs 22 und dem dahinter liegenden weiteren Quersteg 24, an dessen Rückseite 25" die Längsstege 23 fortgesetzt sein können. Zumindest der vordere Quersteg 22 der Verstärkungsstruktur 14 ist mit der Innenfläche 26 des Flügelbodens 13 dicht verbunden und der Quersteg 22 und die Innenfläche 26 bilden Wandungen 27 eines Wasserkanals 28, der sich in Fahrzeugquerrichtung FQ über im wesentlichen die Breite des Heckflügels 7 erstrecken kann. Die Innenfläche 26 ist vorzugsweise entgegen der Fahrtrichtung FR geneigt bzw. fällt in Richtung der Stegfläche 25 ab und schließt somit einen Winkel mit einer nicht gezeigten Horizontalen ein, so dass der Wasserkanal 28 einen etwa V - förmigen Querschnitt besitzen kann.

In Fig. 3 ist lediglich eine Hälfte des Heckflügels 7 dargestellt, der somit bezüglich einer in Fahrzeuglängsrichtung FL verlaufenden Spiegelachse 29 symmetrisch ist. Im Verlauf des Wasserkanals 28 liegt wenigstens ein Durchbruch 30, der den Flügelboden 13 vollständig durchsetzt und so eine Wasserablauföffnung bildet. Etwa - in Fahrzeugquerrichtung FQ gesehen - mittig am Heckflügel 7 ist der Quersteg 22 entgegen der Fahrtrichtung FR in einem ersten Bereich 31 über eine Stufe 32 zurückversetzt, so dass ein erster beckenartiger Sammelabschnitt 33 des Wasserkanals 28 ausgeführt ist, in dem der Durchbruch 30, vorzugsweise benachbart zur Stegfläche 25, liegt.

In einem mit seitlichem Abstand zum ersten Bereich 31 liegenden zweiten Bereich 34 ist der Quersteg 22 entgegen der Fahrtrichtung FR zurückversetzt, so dass ein zweiter beckenartiger Sammelabschnitt 35 des Wasserkanals 28 am seitlichen Ende 36 des Heckflügels 7 angeordnet ist, welcher Sammelabschnitt 35 eine Stufe 32 und einen sich daran anschließenden zurückversetzten Sammelbogen 37 aufweist. Der Sammelbogen 37 ist um einen - in Fahrtrichtung FR gesehen - vor ihm liegenden Ringkragen 38 herumgeführt und setzt den Quersteg 22 bis zum vorderen Abschnitt 18 der Fügefläche 17 fort, so dass ein Stegende 39 benachbart zum Abschnitt 18 liegt bzw. daran heranreicht. Der Ringkragen 38 bildet einen innerhalb des Heckflügels 7 liegenden Fortsatz der sonst außerhalb des Hohlkörpers 11 liegenden Stütze 10, die den bereits erwähnten, jedoch nicht gezeigte Aussteller für den Heckflügel 7 in ihrem Innern 40 aufnehmen kann. Der Ringkragen 38 geht von der Innenfläche 26 der Unterschale 20 aus, und durch ihn wird verhindert, dass Wasser in das Innere 40 der Stütze 10 gelangen kann. In einem oder beiden Sammelabschnitten 33 bzw. 35 ist zumindest ein Durchbruch 30 angeordnet. Die Unterschale 20 mit der Verstärkungsstruktur 14 und ggf. mit der Stütze 10 können als einstückiges Bauteil, insbesondere aus Kunststoff, gefertigt sein.

Um das ggf. an der Fügefläche 17 im Abschnitt 18 eintretende Wasser vorteilhaft ableiten zu können, fällt der Quersteg 22 zumindest in einem Stegabschnitt 41 zu zumindest einem der Sammelabschnitte 33 bzw. 35 hin ab. Im gezeigten Ausführungsbeispiel liegt dieser Stegabschnitt 41 zwischen den beiden Stufen 32 und fällt - ausgehend von der Stufe 32 des zweiten Sammelabschnitts 35 - in Richtung des mittigen ersten Sammelabschnitts 33 zu dessen Stufe 32 hin ab.

Aus dem Schnitt durch den Heckflügel 7 nach Fig. 5 ist am Teil 16 bzw. an der Oberschale 21 noch ein Wasserabweissteg 42 ersichtlich, der der ebenen Stegfläche 25 - in Fahrtrichtung FR gesehen - vorgelagert ist, also zwischen dem Abschnitt 18 der Fügefläche 17 und dem Quersteg 22 aufrecht angeordnet ist. Der Wasserabweissteg 42 verläuft entlang des Querstegs 22 und ggf. zumindest abschnittweise parallel zum Abschnitt 18 der Fügefläche 17 und/oder zum Quersteg 22; er erstreckt sich vorzugsweise bis zum Stegende 39 und geht von der Flügeldachunterseite 43 aus und weist dabei in Richtung des Flügelbodens 13. Ferner kann der Wasserabweissteg 42 - in Fahrtrichtung FR gesehen - mit Abstand zum Quersteg 22 liegen oder auch daran angelegt sein. Die Höhe des ggf. einstückig mit der - beispielsweise aus Kunststoff hergestellten - Oberschale 21 realisierten Wasserabweisstegs 42 ist vorzugsweise so bemessen, dass sein freies Ende 44 in den Wasserkanal 28 hineinragt, also mit seinem Ende 44 unterhalb des freien Endes 45 des Querstegs 22 liegt, jedoch mit Abstand zur Innenfläche 26 abschließt. Der Wasserabweissteg 42 bildet so eine Barriere für am Abschnitt 18 ggf. eindringendes Wasser, das von dem Wasserabweissteg 42 in den Wasserkanal 28 abtropft. Wasserabweissteg 42 und Quersteg 22 bilden demnach eine labyrinthartige Abdichtung, die ein Vordringen des Wassers bis hinter den Quersteg 22 verhindert, zumindest jedoch vermindert.

## Patentansprüche

1. Heckflügel (7) für ein Kraftfahrzeug, mit einem Hohlkörper (11), der aus wenigstens zwei Teilen (15, 16) zusammengefügt ist, mit einem Flügeldach (12) und einem Flügelboden (13), mit einer innerhalb des Hohlkörpers (11) angeordneten, mehrere aufrechte Stege aufweisenden Verstärkungsstruktur (14), von der wenigstens ein in Fahrzeugquerrichtung verlaufender Quersteg (22) mit der Innenfläche (26) des Flügelbodens (13) verbunden ist, und mit zumindest einem in dem Flügelboden (13) eingebrachten Durchbruch (30), **dadurch gekennzeichnet, dass** der wenigstens eine Quersteg (22) eine ebene Stegfläche (25) aufweist, die eine Wandung (27) eines Wasserkanals (28) bildet, und dass im Verlauf des Wasserkanals (28) der zumindest eine Durchbruch (30) liegt.

2. Heckflügel nach Anspruch 1, **dadurch gekennzeichnet, dass** die Stegfläche (25) zusammen mit der Innenfläche (26) des Flügelbodens (13) den Wasserkanal (28) bildet.

3. Heckflügel nach Anspruch 1, **dadurch gekennzeichnet, dass** ein Teil (15) des Hohlkörpers (11) eine Unterschale (20) und der andere Teil (16) eine Oberschale (21) bildet.

4. Heckflügel nach Anspruch 1, **dadurch gekennzeichnet, dass** ein vorderer Abschnitt (18) der Fügefläche (17) der beiden Teile (15, 16) an einer - in Fahrtrichtung (FR) gesehen - vorderen Stirnseite (19) des Heckflügels (7) liegt.

5. Heckflügel nach Anspruch 4, **dadurch gekennzeichnet, dass** die ebene Stegfläche (25) dem vorderen Abschnitt (18) der Fügefläche (17) zugewandt ist.

6. Heckflügel nach Anspruch 1, **dadurch gekennzeichnet, dass** auf der Innenfläche (26) ein aufrechter Ringkragen (38) angeordnet ist, der einer Stütze (10) für den Heckflügel (7) zugeordnet ist.

7. Heckflügel nach Anspruch 1, **dadurch gekennzeichnet, dass** der Quersteg (22) in zumindest einem Bereich (31, 34) - in Fahrrichtung (FR) gesehen - zurückversetzt ist und so zumindest einen Sammelabschnitt (33, 35) des Wasserkanals (28) bildet.

8. Heckflügel nach Anspruch 7, **dadurch gekennzeichnet, dass** ein erster Sammelabschnitt (33) - in Fahrzeugquerrichtung (FQ) gesehen - etwa in der Mitte des Heckflügels (7) liegt.

9. Heckflügel nach Anspruch 6 und 7, **dadurch gekennzeichnet, dass** ein zweiter Sammelabschnitt (35) - in Fahrtrichtung (FR) gesehen - um den Ringkragen (38), vorzugsweise in einem Sammelbogen (37), herumgeführt ist.

10. Heckflügel nach Anspruch 7, **dadurch gekennzeichnet, dass** in dem zumindest einen Sammelabschnitt (33, 35) der zumindest eine Durchbruch (30) liegt.

11. Heckflügel nach Anspruch 4, **dadurch gekennzeichnet, dass** ein Stegende (39) des Querstegs (22) benachbart zum vorderen Abschnitt (18) der Fügefläche (17) liegt.

12. Heckflügel nach Anspruch 9, **dadurch gekennzeichnet, dass** der zurückversetzte zweite Sammelabschnitt (35) bis zu dem Stegende (39) des Querstegs (22) fortgesetzt ist.

13. Heckflügel nach Anspruch 7, **dadurch gekennzeichnet, dass** ein Stegabschnitt (41) des Querstegs (22) in Richtung des zumindest einen Sammelabschnitts (33, 35) abfallend ausgeführt ist.

14. Heckflügel nach Anspruch 13, **dadurch gekennzeichnet, dass** der Stegabschnitt (41) in Richtung des ersten Sammelabschnitts (33) abfällt.

15. Heckflügel nach Anspruch 13 oder 14, **dadurch gekennzeichnet, dass** zwischen dem Stegabschnitt (41) und dem zurückversetzten ersten Sammelabschnitt (33) eine Stufe (32) liegt.

16. Heckflügel nach Anspruch 1, **dadurch gekennzeichnet, dass** die Verstärkungsstruktur (14) mehrere Längsstege (23) aufweist, die an einer der ebenen Stegfläche (25) abgewandten Rückseite (25') des Querstegs (22) liegen.

17. Heckflügel nach Anspruch 1, **dadurch gekennzeichnet, dass** von der Unterseite (43) des Flügeldachs (13) ein Wasserabweissteg (42) ausgeht, der dem Quersteg (22) - in Fahrtrichtung (FR) gesehen - vorgelagert ist.

18. Heckflügel nach Anspruch 17, **dadurch gekennzeichnet, dass** der Wasserabweissteg (42) in den Wasserkanal (28) hineinragt.

19. Heckflügel nach Anspruch 17, **dadurch gekennzeichnet, dass** der Wasserabweissteg (42) entlang des Querstegs (22) verläuft.

## Claims

1. A rear spoiler (7) for a motor vehicle, with a hollow body (11) assembled from at least two parts (15, 16), with a spoiler top (12) and a spoiler bottom (13), with a reinforcing structure (14) arranged inside the hollow body (11) and having a plurality of upright ribs, of which at least one transverse rib (22) extends in the transverse vehicle direction and is connected to the inner surface (26) of the spoiler bottom (13), and with at least one opening (30) formed in the spoiler bottom (13), **characterised in that** the at least one transverse rib (22) has a flat rib surface (25) forming a wall (27) of a water channel (28), and **in that** the at least one opening (30) lies within the extent of the water channel (28).

2. A rear spoiler according to claim 1, **characterised in that** the rib surface (25) and the inner surface (26) of the spoiler bottom (13) together form the water channel (28).

3. A rear spoiler according to claim 1, **characterised in that** one part (15) of the hollow body (11) forms a lower shell (20) and the other part (16) forms an upper shell (21).

4. A rear spoiler according to claim 1, **characterised in that** a front portion (18) of the joint surface (17) between the two parts (15, 16) lies on a front side (19) of the rear spoiler (7), seen in the direction of travel (FR).

5. A rear spoiler according to claim 4, **characterised in that** the flat rib surface (25) faces the front portion (18) of the joint surface (17).

6. A rear spoiler according to claim 1, **characterised in that** an upright annular collar (38) is arranged on the inner surface (26) and is associated with a support (10) for the rear spoiler (7).

7. A rear spoiler according to claim 1, **characterised in that** the transverse rib (22) is set back in at least one region (31, 34) - seen in the direction of travel (FR) - and thus forms at least one collecting portion (33, 35) of the water channel (28).

8. A rear spoiler according to claim 7, **characterised in that** a first collecting portion (33) - seen in the transverse vehicle direction (FQ) - lies approximately in the middle of the rear spoiler (7).

9. A rear spoiler according to claims 6 and 7, **characterised in that** a second collecting portion (35) - seen in the direction of travel (FR) - is guided around the annular collar (38), preferably in a collecting curve (37).

10. A rear spoiler according to claim 7, **characterised in that** the at least one opening (30) lies in the at least one collecting portion (33, 35).

11. A rear spoiler according to claim 4, **characterised in that** an end (39) of the transverse rib (22) lies adjacent to the front portion (18) of the joint surface (17).

12. A rear spoiler according to claim 9, **characterised in that** the set-back second collecting portion (35) continues as far as the end (39) of the transverse rib (22).

13. A rear spoiler according to claim 7, **characterised in that** a rib portion (41) of the transverse rib (22) slopes downwards in the direction of the at least one collecting portion (33, 35).

14. A rear spoiler according to claim 13, **characterised in that** the rib portion (41) slopes downwards in the direction of the first collecting portion (33).

15. A rear spoiler according to claim 13 or 14, **characterised in that** a step (32) lies between the rib portion (41) and the set-back first collecting portion (33).

16. A rear spoiler according to claim 1, **characterised in that** the reinforcing structure (14) has a plurality of longitudinal ribs (23) lying against a rear surface (25') of the transverse rib (22), the rear surface (25') being remote from the flat rib surface (25).

17. A rear spoiler according to claim 1, **characterised in that** a water deflection rib (42) extends from the underside (43) of the spoiler top (13) and is mounted in front of the transverse rib (22), seen in the direction of travel (FR).

18. A rear spoiler according to claim 17, **characterised in that** the water deflection rib (42) projects into the water channel (28).

19. A rear spoiler according to claim 17, **characterised in that** the water deflection rib (42) extends along the transverse rib (22).

## Revendications

1. Aileron arrière (7) pour un véhicule automobile, avec un corps creux (11), qui est assemblé à partir d'au moins deux éléments (15, 16), avec un fond supérieur de l'aileron (12) et un fond inférieur de l'aileron (13), avec une structure de renfort (14) disposée à l'intérieur du corps creux (11), comportant plusieurs nervures verticales, dont au moins l'une des nervures transversales (22) s'étendant dans le sens transversal du véhicule est reliée à la surface intérieure (26) du fond inférieur de l'aileron (13) et avec au moins un jour (30) ménagé dans le fond inférieur de l'aileron (13), **caractérisé en ce que** la au moins une nervure transversale (22) comporte une surface de nervure plane (25) qui forme une paroi (27) d'un canal d'eau (28) et **en ce que** le au moins un jour (30) se situe sur le trajet du canal d'eau (28).

2. Aileron arrière selon la revendication 1, **caractérisé en ce qu'**en association avec la surface intérieure (26) du fond inférieur de l'aileron (13), la surface de nervure (25) forme le canal d'eau (28).

3. Aileron arrière selon la revendication 1, **caractérisé en ce qu'**un élément (15) du corps creux (11) forme une coque inférieure (20) et l'autre élément (16) forme une coque supérieure (21).

4. Aileron arrière selon la revendication 1, **caractérisé en ce qu'**une section antérieure (18) de la surface d'aboutage (17) des deux éléments (15, 16) se situe sur une face frontale antérieure (19) (vue dans le sens de conduite (FR)) de l'aileron arrière (7).

5. Aileron arrière selon la revendication 4, **caractérisé en ce que** la surface de nervure plane (25) est dirigée vers la section antérieure (18) de la surface d'aboutage (17).

6. Aileron arrière selon la revendication 1, **caractérisé en ce qu'**une collerette annulaire verticale (38) à laquelle est associé un support (10) pour l'aileron arrière (7) est disposée sur la face intérieure (26).

7. Aileron arrière selon la revendication 1, **caractérisé en ce que** la nervure transversale (22) est déportée vers l'arrière (vue dans le sens de conduite (FR) dans au moins une zone (31, 34) et forme de cette façon au moins une section de collecte (33, 35) du canal d'eau (28).

8. Aileron arrière selon la revendication 7, **caractérisé en ce qu'**une première section de collecte (33) se situe approximativement au centre (vu dans le sens transversale du véhicule (FQ)) de l'aileron arrière (7).

9. Aileron arrière selon la revendication 6 et 7, **caractérisé en ce qu'**une deuxième section de collecte (35) entoure la collerette annulaire (38) (vue dans le sens de conduite (FR)), de préférence dans une courbure de collecte (37).

10. Aileron arrière selon la revendication 7, **caractérisé en ce que** le au moins un jour (30) se situe dans la au moins une section de collecte (33, 35).

11. Aileron arrière selon la revendication 4, **caractérisé en ce qu'**une extrémité de nervure (39) de la nervure transversale (22) se situe au voisinage de la section antérieure (18) de la surface d'aboutage (17).

12. Aileron arrière selon la revendication 9, **caractérisé en ce que** la deuxième section de collecte déportée (35) se poursuit jusqu'à l'extrémité de nervure (39) de la nervure transversale (22).

13. Aileron arrière selon la revendication 7, **caractérisé en ce qu'**une section de nervure (41) de la nervure transversale (22) est conçue de façon à décliner en direction de la au moins une section de collecte (33, 35).

14. Aileron arrière selon la revendication 13, **caractérisé en ce que** la section de nervure (41) décline en direction de la première section de collecte (33).

15. Aileron arrière selon la revendication 13 ou 14, **caractérisé en ce qu'**un grade (32) se situe entre la section de nervure (41) et la première section de collecte déportée (33).

16. Aileron arrière selon la revendication 1, **caractérisé en ce que** la structure de renfort (14) comporte plusieurs nervures longitudinales (23) qui se situent sur une face arrière (25') de la nervure transversale (22) qui est opposée à l'une des surfaces de nervure plane (25).

17. Aileron arrière selon la revendication 1, **caractérisé en ce qu'**une nervure déflectrice d'eau (42) qui est située en amont (vue dans le sens de conduite (FR)) de la nervure transversale (22) part de la face inférieure (43) du fond supérieur de l'aileron (13).

18. Aileron arrière selon la revendication 17, **caractérisé en ce que** la nervure déflectrice d'eau (42) saillit dans le canal d'eau (28).

19. Aileron arrière selon la revendication 17, **caractérisé en ce que** la nervure déflectrice d'eau (42) s'étend le long de la nervure transversale (22).
